# EUROPEAN PATENT SPECIFICATION

(11) **EP 2 673 119 B1**
(45) Date of publication and mention of the grant of the patent: **16.12.2015**
(21) Application number: 11702637.7
(22) Date of filing: 07.02.2011
(51) Int. Cl.: B25J 15/00, B25J 19/06

(54) **INDUSTRIAL ROBOT WITH A COLLAPSIBLE PROCESS FORCE APPLICATOR**
INDUSTRIEROBOTER MIT EINEM ZUSAMMENKLAPPBAREN PROZESSKRAFTAPPLIKATOR
ROBOT INDUSTRIEL À APPLICATEUR DE FORCE DE TRAITEMENT PLIABLE

(43) Date of publication of application: 18.12.2013
(73) Proprietor: ABB Research Ltd., 8050 Zürich (CH)
(72) Inventor: LUNDBERG, Ivan, S-722 46 Västerås (SE); SIRKETT, Daniel, S-722 10 Västerås (SE); LARSSON, Jan, S-724 78 Västerås (SE)
(74) Representative: Savela, Reino Aleksi
(86) International application number: PCT/EP2011/051748
(87) International publication number: WO 2012/010332

(56) References cited:
- WO-A1-2009/080373
- GB-A- 900 581
- JP-A- 2001 003 951
- US-A1- 2009 025 199

## Description

### TECHNICAL FIELD

The present invention relates to an industrial robot with a process force applicator which is collapsible for safety reasons.

### BACKGROUND ART

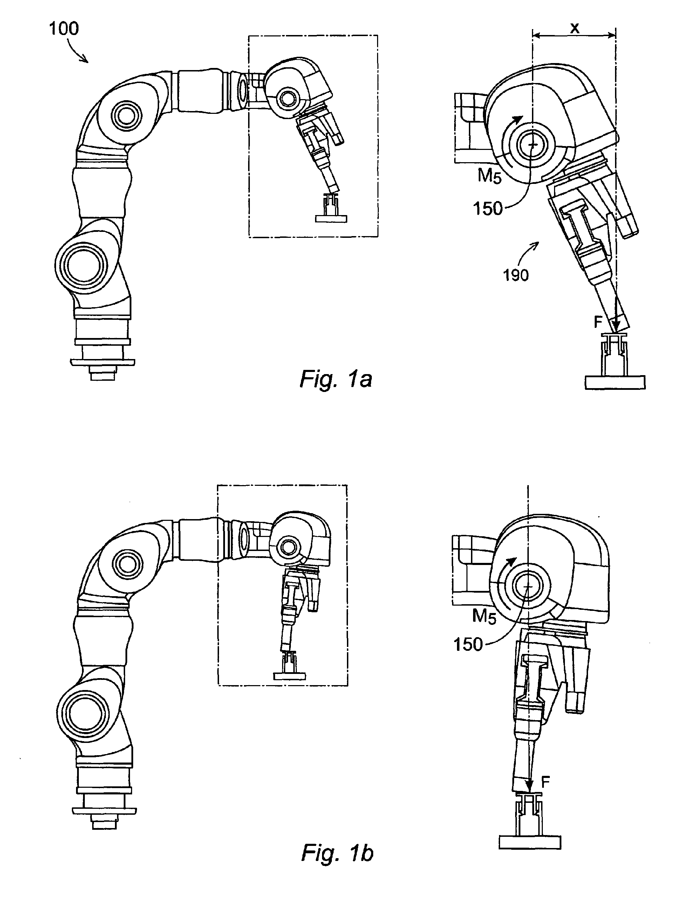

Referring to figure 1, an industrial robot 100 is often required to exert a specified process force F e.g. in connection with a task of pushing snap-fit components into place. In order to render the robot 100 inherently safe, it is desirable to limit the magnitude of the process force F in a passive manner. A process force applicator exerting the process force can therefore be designed to collapse when a predetermined maximum force is exceeded. One such collapsible process force applicator has been disclosed in GB900581 wherein an attractive force of a magnet determines the maximum force to be exerted.

Generally, an end effector 190 is fixedly mounted to the last axis of a robot 100. All the available dimensions of freedom of the robot 100 can only be utilized when the end effector 190 is mounted to the last axis. The document US-A-2009 025199 discloses a process force applicator mounted on the last axis of a robot. The document GB-A-900581 discloses a collapsible process force applicator comprising a housing, a tip, and a biasing mechanism for keeping the tip in a first position in relation to the housing the tip being configured to move away from the position when a predetermined force on the tip is exceeded. Therefore, if the collapsible process force applicator according to GB-A-900581 was to be mounted to the robot 100, it would be the most obvious choice to mount it to the last axis. US5954446 discloses a robot wherein a collapsible tool mounting mechanism is mounted to the last axis. According to US5954446, the tool mounting mechanism is configured to disengage when a predetermined force on a welding torch is exceeded.

Exerting a process force **F** with the end effector 190 mounted to the last axis of the robot 100 may have several drawbacks. Especially in connection with small assembly robots the actuating motors on wrist axes may not be sufficiently powerful if the process force **F** is to be exerted in a direction that occasions a torque on one or more of the motors. Such a situation is illustrated in figure 1a wherein the process force **F** occasions a torque **M₅** on the fifth axis 150 via a lever arm with a length **x.** In the situation illustrated in figure 1b the end effector 190 is oriented such that the exertion of process force **F** does not occasion torque (**x**=0, **M₅**=0) on any of the wrist axes. Such unique orientation complicates programming, reduces dexterity and may not even be achievable for the desired position. Furthermore, the last axis often carries an end effector 190 that is not feasible for exerting a process force. For example, a mechanical structure of a lightweight gripper may not be strong enough to stand the load required to push snap-fit components into place with the grip fingers. When the last axis is already occupied by an end effector 190, it is difficult to provide it with an additional end effector which is more feasible for the pushing task.

### SUMMARY OF THE INVENTION

One object of the invention is to provide an industrial robot with an improved ability to exert a process force. This object is achieved by the device according to appended claim 1.

The invention is based on the realization that by mounting a process force applicator to an industrial robot downstream from the last axis, greater process force can be applied, and the last axis can instead be utilized to carry another type of end effector.

According to a first aspect of the invention, there is provided an industrial robot comprising a collapsible process force applicator. The collapsible process force applicator comprises a housing, a tip, and a biasing mechanism for keeping the tip in a first position in relation to the housing. The tip is configured to move away from the first position when a predetermined force on the tip is exceeded. The robot has at least one axis upstream from the collapsible process force applicator. When the process force applicator is mounted downstream from the last axis, greater process force can be applied, and the last axis can be utilized to carry another type of end effector.

According to one embodiment of the invention, the tip is configured to move in one straight direction i.e. a principal operation direction in relation to the housing. Defining one principal operation direction makes an operation of the collapsible process force applicator unambiguous.

According to one embodiment of the invention, the robot has at least two axes, such as at least three axes, on which an actuation of the collapsible process force applicator in a principal operation direction never occasions a torque. When the collapsible process force applicator is mounted such that its operation does not occasion a torque on the wrist axes, the process force does not need to be considered when dimensioning the actuating motors on the wrist axes. Consequently, the actuating motors can be dimensioned smaller.

According to one embodiment of the invention, the biasing mechanism is configured to be disengaged in an abrupt manner. This is a safety factor since an abrupt disengagement may, for example, prevent an injury on a trapped human finger.

According to one embodiment of the invention, the biasing mechanism comprises a magnet. An abrupt disengagement is readily achieved with help of a magnet since an attractive force of a magnet decreases rapidly with an increased distance from the same.

According to one embodiment of the invention, the magnet has a circular shape. A circular shape of the magnet ensures symmetrical operation of the collapsible process force applicator in all directions of side impacts on the tip.

According to one embodiment of the invention, the magnet is comprised within a pot made of ferrous magnetic metal. Such pot concentrates the magnetic field to the outer periphery of the magnet, and to a short distance into the space facing the magnet. Consequently, an even more abrupt disengagement of the biasing mechanism is achieved.

According to one embodiment of the invention, the magnet is stationary in relation to the housing. Commercial magnet systems are available whose construction is well adapted for a preferred embodiment with a stationary magnet.

According to one embodiment of the invention, the housing comprises a plurality of flexible retainers for keeping the magnet in place. The flexible retainers result the collapsible process force applicator to be easy to be assembled and disassembled.

According to one embodiment of the invention, the tip is connected to the housing via a shaft which is configured to retract into the housing when the tip is moving away from the first position. The housing together with the retractable shaft constitute an easily manageable unit which is convenient to handle and to attach to a desired robot part.

According to one embodiment of the invention, a rotating movement of the shaft in relation to the housing is prevented. By this measure, tightening and loosening of an interchangeable tip is facilitated.

According to one embodiment of the invention, the biasing mechanism comprises a magnet with a magnet opening through which the shaft extends. An allowed inclination of the shaft in relation to the housing is easily defined by appropriately dimensioning the magnet opening.

According to one embodiment of the invention, the collapsible process force applicator comprises an elastic restoration element for returning the tip into the first position. The elastic restoration element ensures an automatic restoration of the collapsible process force applicator, whereupon the same may again be actuated.

According to one embodiment of the invention, the elastic restoration element comprises a viscoelastic material. The elasticity of the restoration element material is obviously needed for ensuring a correct operation, and the viscosity of the same gives the operation an impression of smoothness.

According to one embodiment of the invention, the collapsible process force applicator is configured to be able to shorten at least 10%, such as at least 15% or at least 20 %, compared with the full length of the device in the principal operation direction. The higher the relative shortening distance the more compact may the collapsible process force applicator be construed.

According to one embodiment of the invention, the collapsible process force applicator is configured to be able to shorten at least 2 mm, such as at least 3 mm, at least 5 mm or at least 10 mm. The longer the absolute shortening distance the safer the collapsible process force applicator is.

According to one embodiment of the invention, the tip is configured to be able to be inclined away from the first position by at least 2 degrees, such as at least 3 degrees or at least 5 degrees. The larger the allowed inclination the safer the collapsible process force applicator is.

According to one embodiment of the invention, the collapsible process force applicator comprises a conical surface for locating the tip into the first position. A conical surface provides a simple means for a repeatable positioning of the tip.

According to one embodiment of the invention, the tip is configured to be interchangeable. By this measure, the collapsible process force applicator can be readily adapted for different applications.

### BRIEF DESCRIPTION OF THE DRAWINGS

The invention will be explained in greater detail with reference to the accompanying drawings, wherein
figure 1a illustrates an occasion of torque on the fifth axis when a tool tip is used for exerting a process force,
figure 1b illustrates a unique orientation of the robot preventing an occasion of torque on the fifth axis,
figure 2 shows a robot according to one embodiment of the invention,
figure 3 shows one embodiment of a collapsible process force applicator, and
figure 4 illustrates a function of a collapsible process force applicator.

### DESCRIPTION OF PREFERRED EMBODIMENTS

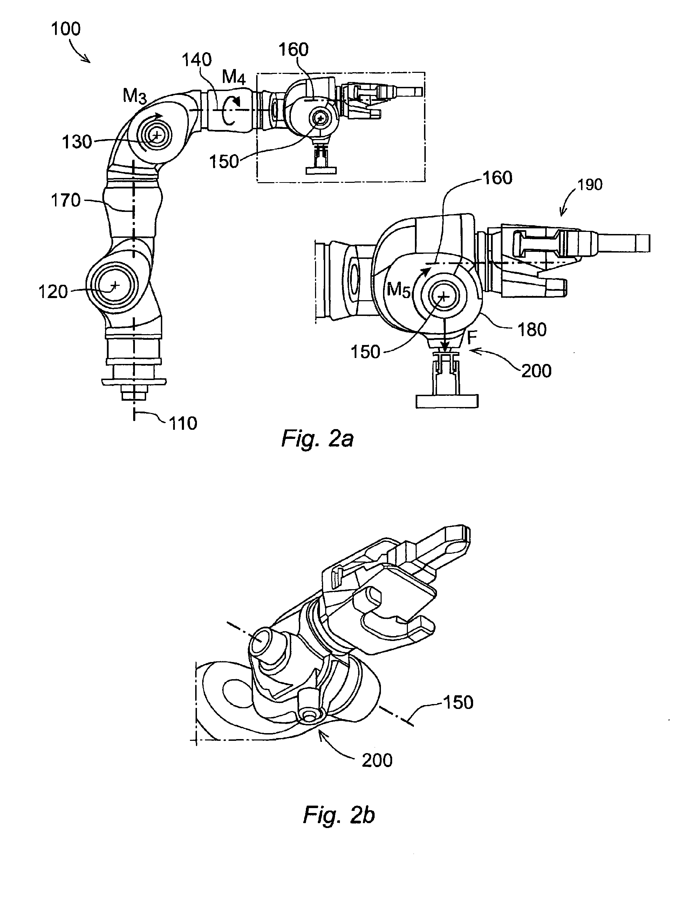

Referring to figure 2, a collapsible process force applicator 200 is mounted to a bearing housing 180 of a fifth robot axis 150. There is one more axis upstream from the fifth axis 150, a sixth axis 160, which in the case of the illustrated robot is also the last axis counted from the stationary base of the robot. The illustrated robot actually has seven degrees of freedom and thereby also seven axes. For historical reasons, however, the wrist axes (the last three axes) are called fourth, fifth and sixth axes 140, 150, 160, respectively, and the "additional" third joint upstream from a stationary base is called a seventh axis 170. The seventh axis 170 is preceded by first and second axes 110, 120 downstream from it, and followed by a third axis 130 upstream from it. No matter what the different axes are called, an actuation of the collapsible process force applicator 200 occasions a load on all the axes downstream from it, but not on the last axis upstream from it. If there would be several axes upstream from the collapsible process force applicator 200, as the case might be, the actuation of the same would never occasion a load on any of the upstream axes. Moreover, for actuating the collapsible process force applicator 200, axes upstream from it do normally not even need to be controlled.

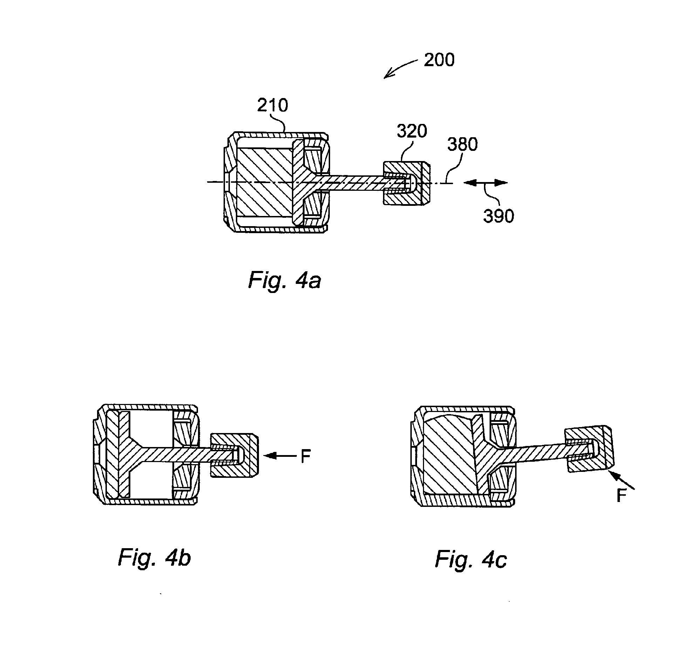

Referring to figure 4a, a tip 320 of the collapsible process force applicator 200 is configured to move in one straight axial direction in relation to a housing 210. In the following, this direction is called a principal operation direction 390. According to the embodiment of figure 2, the collapsible process force applicator 200 is mounted such that its principal operation direction 390 is normal to the fifth axis 150. In other words, the principal operation direction 390 is both perpendicular to and intersecting with the fifth axis 150. Additionally, the principal operation direction 390 intersects with the fourth axis 140. Consequently, actuation of the collapsible process force applicator 200 in the principal operation direction 390 never occasions a torque on the fourth or on the fifth axis 140, 150 (**M₄**=**M₅**=0). Obviously, actuation of the collapsible process force applicator 200 never occasions a torque (or any other load) on the sixth axis 160 either. Instead, in the situation illustrated in figure 2a it is the motor at the third axis 130 that provides the torque **M₃** required to produce the process force **F**. Figure 2b further illustrates the location of the collapsible process force applicator 200 at a bearing housing 180 of the fifth robot axis 150.

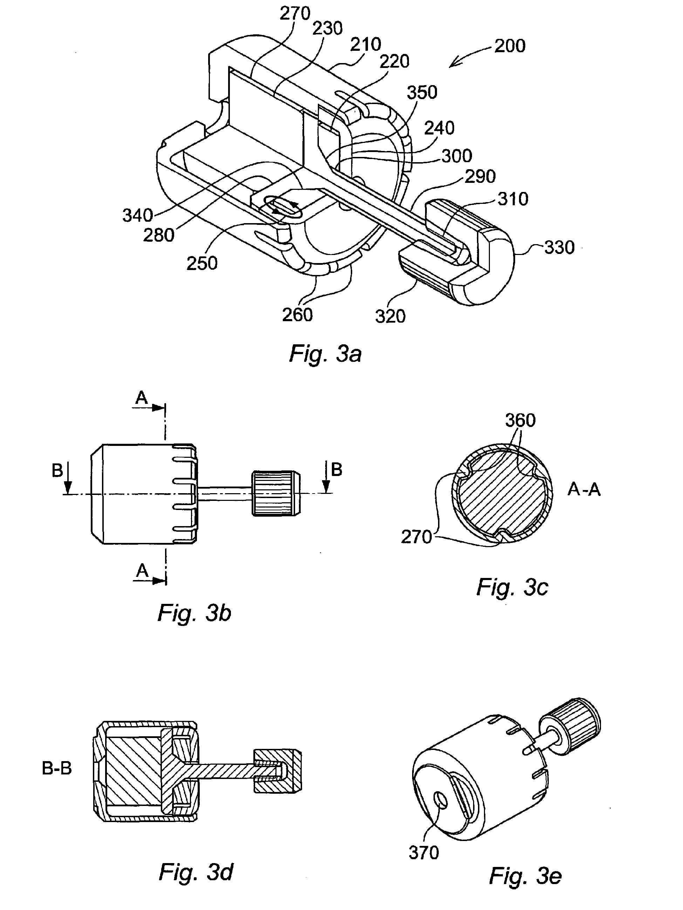

Referring to figure 3, the collapsible process force applicator 200 comprises an injection-moulded thermoplastic housing 210 within which a magnet 220 and a viscoelastic restoration element 230 are housed. The magnet 220 is comprised within an iron pot 240 which provides a return path for the magnetic flux such that the magnetic flux circuit 250 is concentrated to the outer periphery of the ring-shaped magnet 220. The iron pot 240 and the magnet 220 are kept in place between a plurality of flexible retainers 260 engaging the proximal side of the iron pot 240, and three pillars 270 integrated to the inner wall of the housing 210 for engaging the distal side of the iron pot 240.

A plunger assembly consisting of a soft magnetic material has a disc portion 280 within the housing 210, and a shaft 290 extending out of the housing 210 through a magnet opening 300. The shaft 290 terminates with an externally threaded portion 310 on which an interchangeable tip 320 is screwed. The tip 320 comprises a thermoplastic body into which an internally threaded insert is press-fitted. The distal end of the thermoplastic body is equipped with a bonded rubber cushion 330. The plunger assembly further comprises an outer conical surface 340 which is configured to interact with a corresponding inner conical surface 350 in the magnet opening 300 for positioning the tip 320 into a first position in relation to the housing 210. The biasing force for keeping the tip 320 in the first position is primarily provided by the magnet 220, and the tip 320 is configured to move away from the first position when being actuated with a force that exceeds an attractive force of the magnet 220. The restoration element 230 is responsible for returning the tip 320 into the first position once the actuation force on the tip 320 has been removed.

The disc portion 280 is provided with three cut-outs 360 which receive the three pillars 270 protruding from the housing wall. A rotating movement of the plunger assembly in relation to the housing 210 is thereby prevented, which facilitates tightening and loosening of the interchangeable tip 320. An axial surface of the housing 210 comprises a screw hole 370 for attaching the housing 210 to a robot with a screw.

Referring to figure 4, in operation the collapsible process force applicator 200 is actuated by applying process force **F** via the rubber cushion 330. When the magnitude of the applied force exceeds the attractive force of the magnet 220, the disc portion 280 disconnects from the face of the magnet 220 and compresses the restoration element 230. During this collapsing the shaft 290 retracts into the housing 210. As illustrated in figures 4b and 4c, the mechanism is capable of collapsing in response to both axial and side impacts. The magnet opening 300 is large enough to allow the shaft 290 to incline about 9 degrees in relation to the housing 210. Despite the allowed inclination, it is clear that the tip 320 is primarily configured to move in the direction coinciding with the axial centre line 380 of the housing 210 i.e. in the previously mentioned principal operation direction 390.

Allowing the inclination of the shaft 290 is not the only reason for making the magnet opening 300 large; a large magnet opening 300 also cuts a return path for the magnetic flux through the shaft 290, and thereby prevents magnetization of the same. Instead of magnetizing the shaft 290, the iron pot 240 is configured to concentrate the magnetic field to the outer periphery of the circular disc portion 280, and to a short distance into the space facing the magnet 220 when the disc portion 280 is not engaged. Following from the magnetic field extending only a short distance into a space, the magnetic biasing mechanism disengages in a very abrupt manner. In other words, the displacement of the tip 320 has a highly non-linear relation with the actuation force. When the actuation force after collapsing is removed, the decompression of the restoration element 230 urges the disc portion 280 back into engagement with the magnet 220. The outer conical surface 340 of the plunger assembly engages the inner conical surface 350 of the magnet opening 300 and thereby ensures a repeatable positioning of the tip 320.

The invention is not limited to the embodiments shown above, but the person skilled in the art may, of course, modify them in a plurality of ways within the scope of the invention as defined by the claims.

## Claims

1. An industrial robot comprising:
- a collapsible process force applicator (200) comprising a housing (210), a tip (320), and a biasing mechanism for keeping the tip (320) in a first position in relation to the housing (210), the tip (320) being configured to move away from the first position when a predetermined force on the tip (320) is exceeded,
wherein the robot has at least one axis upstream from the collapsible process force applicator (200).

2. An industrial robot according to claim 1, wherein the tip (320) is configured to move in one straight direction i.e. a principal operation direction (390) in relation to the housing (210).

3. An industrial robot according to claim 2, wherein the robot has at least two axes, such as at least three axes, on which an actuation of the collapsible process force applicator (200) in the principal operation direction (390) never occasions a torque.

4. An industrial robot according to any of the preceding claims, wherein the biasing mechanism is configured to be disengaged in an abrupt manner.

5. An industrial robot according to any of the preceding claims, wherein the biasing mechanism comprises a magnet (220).

6. An industrial robot according to claim 5, wherein the magnet (220) has a circular shape.

7. An industrial robot according to claims 5 or 6, wherein the magnet (220) is comprised within a pot (240) made of ferrous magnetic metal.

8. An industrial robot according to any of claims 5 to 7, wherein the magnet (220) is stationary in relation to the housing (210).

9. An industrial robot according to any of claims 5 to 8, wherein the housing (210) comprises a plurality of flexible retainers (260) for keeping the magnet (220) in place.

10. An industrial robot according to any of the preceding claims, wherein the tip (320) is connected to the housing (210) via a shaft (290) which is configured to retract into the housing (210) when the tip (320) is moving away from the first position.

11. An industrial robot according to claim 10, wherein a rotating movement of the shaft (290) in relation to the housing (210) is prevented.

12. An industrial robot according to claim 10 or 11, wherein the biasing mechanism comprises a magnet (220) with a magnet opening (300) through which the shaft (290) extends.

13. An industrial robot according to any of the preceding claims, wherein the collapsible process force applicator (200) comprises an elastic restoration element (230) for returning the tip (320) into the first position.

14. An industrial robot according to claim 13, wherein the elastic restoration element (230) comprises a viscoelastic material.

15. An industrial robot according to any of the preceding claims, wherein the collapsible process force applicator (200) is configured to be able to shorten at least 10%, such as at least 15% or at least 20 %, compared with the full length of the device in the principal operation direction (390).

16. An industrial robot according to any of the preceding claims, wherein the collapsible process force applicator (200) is configured to be able to shorten at least 2 mm, such as at least 3 mm, at least 5 mm or at least 10 mm in the principal operation direction (390).

17. An industrial robot according to any of the preceding claims, wherein the tip (320) is configured to be able to be inclined away from the first position by at least 2 degrees, such as at least 3 degrees or at least 5 degrees.

18. An industrial robot according to any of the preceding claims, wherein the collapsible process force applicator (200) comprises a conical surface (340, 350) for locating the tip (320) into the first position.

19. An industrial robot according to any of the preceding claims, wherein the tip (320) is configured to be interchangeable.

## Patentansprüche

1. Industrieroboter, umfassend:
einen zusammenklappbaren Prozesskraftapplikator (200), der ein Gehäuse (210), eine Spitze (320) und eine Vorspannmechanismus zum Halten der Spitze (320) in einer ersten Position in Bezug auf das Gehäuse (210) umfasst, wobei die Spitze (320) konfiguriert ist, sich weg von der ersten Position zu bewegen, wenn eine vorbestimmte Kraft auf die Spitze (320) überschritten wird, wobei der Roboter mindestens eine Achse stromaufwärts von dem zusammenklappbaren Prozesskraftapplikator (200) umfasst.

2. Industrieroboter nach Anspruch 1, wobei die Spitze (320) konfiguriert ist, sich in einer geraden Richtung, d. h. einer Hauptbetriebsrichtung (390) in Bezug auf das Gehäuse (210) zu bewegen.

3. Industrieroboter nach Anspruch 2, wobei der Roboter mindestens zwei Achsen wie mindestens drei Achsen aufweist, an denen eine Betätigung des zusammenklappbaren Prozesskraftapplikators (200) in der Hauptbetriebsrichtung (390) niemals ein Drehmoment hervorruft.

4. Industrieroboter nach einem der vorhergehenden Ansprüche, wobei der Vorspannmechanismus konfiguriert ist, auf abrupte Art und Weise gelöst zu werden.

5. Industrieroboter nach einem der vorhergehenden Ansprüche, wobei der Vorspannmechanismus einen Magneten (220) umfasst.

6. Industrieroboter nach Anspruch 5, wobei der Magnet (220) eine Kreisform aufweist.

7. Industrieroboter nach einem der Ansprüche 5 oder 6, wobei der Magnet (220) in einem Behälter (240) enthalten ist, der aus ferromagnetischem Metall gefertigt ist.

8. Industrieroboter nach einem der Ansprüche 5 bis 7, wobei der Magnet (220) in Bezug auf das Gehäuse (210) ortsfest ist.

9. Industrieroboter nach einem der Ansprüche 5 bis 8, wobei das Gehäuse (210) mehrere flexible Halteelemente (260) zum Festhalten des Magneten (220) umfasst.

10. Industrieroboter nach einem der vorhergehenden Ansprüche, wobei die Spitze (320) mit dem Gehäuse (210) über eine Welle (290) verbunden ist, die konfiguriert ist, sich in das Gehäuse (210) zurückzuziehen, wenn sich die Spitze (320) weg von der ersten Position bewegt.

11. Industrieroboter nach Anspruch 10, wobei eine Drehbewegung der Welle (290) in Bezug auf das Gehäuse (210) verhindert wird.

12. Industrieroboter nach einem der Ansprüche 10 oder 11, wobei der Vorspannmechanismus einen Magneten (220) mit einer Magnetöffnung (300) umfasst, durch die sich die Welle (290) erstreckt.

13. Industrieroboter nach einem der vorhergehenden Ansprüche, wobei der zusammenklappbare Prozesskraftapplikator (200) ein elastisches Wiederherstellungselement (230) umfasst, um die Spitze (320) in die erste Position zurückzubringen.

14. Industrieroboter nach Anspruch 13, wobei das elastische Wiederherstellungselement (230) ein viskoelastisches Material umfasst.

15. Industrieroboter nach einem der vorhergehenden Ansprüche, wobei der zusammenklappbare Prozesskraftapplikator (200) konfiguriert ist, sich um mindestens 10 % wie mindestens 15 % oder mindestens 20 % im Vergleich zu der vollen Länge der Vorrichtung in der Hauptbetriebsrichtung (390) verkürzen zu können.

16. Industrieroboter nach einem der vorhergehenden Ansprüche, wobei der zusammenklappbare Prozesskraftapplikator (200) konfiguriert ist, sich um mindestens 2 mm wie mindestens 3 mm, mindestens 5 mm oder mindestens 10 mm in der Hauptbetriebsrichtung (390) verkürzen zu können.

17. Industrieroboter nach einem der vorhergehenden Ansprüche, wobei die Spitze (320) konfiguriert ist, sich um mindestens 2 Grad wie mindestens 3 Grad oder mindestens 5 Grad weg von der ersten Position zu bewegen.

18. Industrieroboter nach einem der vorhergehenden Ansprüche, wobei der zusammenklappbare Prozesskraftapplikator (200) eine kegelförmige Oberfläche (340, 350) umfasst, um die Spitze (320) in die erste Position zu bringen.

19. Industrieroboter nach einem der vorhergehenden Ansprüche, wobei die Spitze (320) austauschbar konfiguriert ist.

## Revendications

1. Robot industriel comportant :
- un applicateur repliable (200) d'effort de processus comportant un boîtier (210), un embout (320) et un mécanisme de sollicitation servant à maintenir l'embout (320) dans une première position par rapport au boîtier (210), l'embout (320) étant configuré pour s'écarter de la première position lorsqu'un effort prédéterminé sur l'embout (320) est dépassé,
le robot étant doté d'au moins un axe en amont de l'applicateur repliable (200) d'effort de processus.

2. Robot industriel selon la revendication 1, l'embout (320) étant configuré pour se déplacer dans une seule direction rectiligne, c.à.d. une direction principale (390) de fonctionnement par rapport au boîtier (210).

3. Robot industriel selon la revendication 2, le robot étant doté d'au moins deux axes, par exemple au moins trois axes, sur lesquels un actionnement de l'applicateur repliable (200) d'effort de processus dans la direction principale (390) de fonctionnement n'occasionne jamais un couple.

4. Robot industriel selon l'une quelconque des revendications précédentes, le mécanisme de sollicitation étant configuré pour être désaccouplé de manière abrupte.

5. Robot industriel selon l'une quelconque des revendications précédentes, le mécanisme de sollicitation comportant un aimant (220).

6. Robot industriel selon la revendication 5, l'aimant (220) présentant une forme circulaire.

7. Robot industriel selon les revendications 5 ou 6, l'aimant (220) étant compris à l'intérieur d'une coupelle (240) constituée de métal magnétique ferreux.

8. Robot industriel selon l'une quelconque des revendications 5 à 7, l'aimant (220) étant immobile par rapport au boîtier (210).

9. Robot industriel selon l'une quelconque des revendications 5 à 8, le boîtier (210) comportant une pluralité d'organes souples (260) de retenue servant à maintenir l'aimant (220) en place.

10. Robot industriel selon l'une quelconque des revendications précédentes, l'embout (320) étant relié au boîtier (210) via un arbre (290) qui est configuré pour se rétracter dans le boîtier (210) lorsque l'embout (320) s'écarte de la première position.

11. Robot industriel selon la revendication 10, un mouvement de rotation de l'arbre (290) par rapport au boîtier (210) étant empêché.

12. Robot industriel selon la revendication 10 ou 11, le mécanisme de sollicitation comportant un aimant (220) doté d'une ouverture (300) d'aimant à travers laquelle s'étend l'arbre (290).

13. Robot industriel selon l'une quelconque des revendications précédentes, l'applicateur repliable (200) d'effort de processus comportant un élément (230) de rappel élastique servant à ramener l'embout (320) dans la première position.

14. Robot industriel selon la revendication 13, l'élément (230) de rappel élastique comportant un matériau viscoélastique.

15. Robot industriel selon l'une quelconque des revendications précédentes, l'applicateur repliable (200) d'effort de processus étant configuré pour pouvoir se raccourcir d'au moins 10%, par exemple d'au moins 15% ou d'au moins 20%, comparé à la pleine longueur du dispositif dans la direction principale (390) de fonctionnement.

16. Robot industriel selon l'une quelconque des revendications précédentes, l'applicateur repliable (200) d'effort de processus étant configuré pour pouvoir se raccourcir d'au moins 2 mm, par exemple d'au moins 3 mm, d'au moins 5 mm ou d'au moins 10 mm dans la direction principale (390) de fonctionnement.

17. Robot industriel selon l'une quelconque des revendications précédentes, l'embout (320) étant configuré pour pouvoir être incliné en s'écartant de la première position d'au moins 2 degrés, par exemple d'au moins 3 degrés ou d'au moins 5 degrés.

18. Robot industriel selon l'une quelconque des revendications précédentes, l'applicateur repliable (200) d'effort de processus comportant une surface conique (340, 350) servant à placer l'embout (320) dans la première position.

19. Robot industriel selon l'une quelconque des revendications précédentes, l'embout (320) étant configuré pour être interchangeable.
